# EUROPEAN PATENT APPLICATION

(11) **EP 4 129 555 A1**
(43) Date of publication of application: **08.02.2023**
(21) Application number: 21774083.6
(22) Date of filing: 03.03.2021
(51) Int. Cl.: B23K 26/00, B23K 26/064, G01J 1/02, G01J 1/42, H01S 3/00

(54) **LASER POWER MONITORING DEVICE AND LASER POWER MONITORING METHOD**

(30) Priority: 26.03.2020 JP 2020055949
(71) Applicant: Amada Co., Ltd., Isehara-shi, Kanagawa 259-1196 (JP); Amada Weld Tech Co., Ltd., Isehara-shi Kanagawa 259-1196 (JP)
(72) Inventor: YANASE, Atsushi, Isehara-shi, Kanagawa 259-1196 (JP); NISHIZAKI, Yusuke, Isehara-shi, Kanagawa 259-1196 (JP)
(74) Representative: Grünecker Patent- und Rechtsanwälte PartG mbB
(86) International application number: PCT/JP2021/008151
(87) International publication number: WO 2021/192867

(57) **Abstract**

A right angle reflection prism (13) includes first and second surfaces (13a and 13b) that form a right angle, and a third surface (13c) connected to the first and second surfaces (13a and 13b). The right angle reflection prism (13) causes a laser beam, which is made incident on the first surface (13a) and with which a material to be processed (W)is irradiated, to be totally reflected by the third surface (13c) so as to be emitted from the second surface (13b). A sensor (15) detects a power of a laser beam that has passed through the third surface (13c).

## Description

### Technical Field

The present disclosure relates to a laser power monitoring device and a laser power monitoring method for monitoring a power of a laser beam that is emitted from a laser beam source and with which a material to be processed is irradiated.

### Background Art

. There exists a laser processing machine that bends, with a bend mirror, a laser beam emitted from a laser beam source and irradiates a material to be processed with the laser beam to weld or cut the material to be processed. Patent Literatures 1 and 2 describe monitoring of a power of a laser beam by detecting, with a sensor, a slight laser beam that has passed through a bend mirror.

### Citation List

### Patent Literature

Patent Literature 1: Japanese Patent Application Laid-Open Publication No. 2006-247681
Patent Literature 2: Japanese Patent Application Laid-Open Publication No. 2012-179627

### Summary

In the laser power monitoring device as described in Patent Literature 1 and 2, a dichroic mirror that reflects a laser beam of a specific wavelength may be used as the bend mirror. The dichroic mirror is arranged at an angle of 45 degrees with respect to an optical axis of the laser beam. A dielectric multilayer film is formed on a reflecting surface of the dichroic mirror, and the dielectric multilayer film reflects the laser beam of a specific wavelength.

The laser beam includes a P wave and an S wave as polarization components. The polarization ratio, which is the ratio of the amount of the P wave to the amount of the S wave, changes due to the temperature environment and the like of an oscillator included in the laser beam source. When the polarization ratio of the laser beam changes, the reflectance, transmittance, or reflection band of the laser beam made incident at 45 degrees in the dielectric multilayer film changes. Therefore, the power of the laser beam that passes through the dichroic mirror and is made incident on the sensor changes. In other words, in the laser power monitoring device, which is used for a laser processing machine using the dichroic mirror as the bend mirror and is configured to detect, with the sensor, the laser beam that has passed through the dichroic mirror, it is not possible to monitor the power of the laser beam in a stable manner because the polarization ratio of the P wave to the S wave of the laser beam changes.

An object of one or more embodiments is to provide a laser power monitoring device and a laser power monitoring method capable of, even if the polarization ratio of the P wave to the S wave of a laser beam changes, stably monitoring a power of the laser beam with reduced influence of the change.

According to a first aspect of the one or more embodiments, a laser power monitoring device is provided, which includes a right angle reflection prism including first and second surfaces that form a right angle, and a third surface connected to the first and second surfaces, a laser beam for irradiation of a material to be processed being incident on the first surface, and being totally reflected by the third surface so as to be emitted from the second surface, and a sensor configured to detect a power of a laser beam that has passed through the third surface.

According to a second aspect of the one or more embodiments, a laser power monitoring method is provided, which includes causing a laser beam for irradiation of a material to be processed to be made incident on a first surface of a right angle reflection prism including the first surface and a second surface that form a right angle, and a third surface connected to the first and second surfaces, causing the laser beam made incident on the first surface to be totally reflected by the third surface so as to be emitted from the second surface, and detecting, by a sensor, a power of a laser beam that has passed through the third surface.

According to the laser power monitoring device and the laser power monitoring method of the one or more embodiments, even if the polarization ratio of the P wave to the S wave of the laser beam changes, it is possible to stably monitor the power of the laser beam with reduced influence of the change.

### Brief Description of Drawings

[Figure 1] Figure 1 is a diagram showing a laser power monitoring device and a laser power monitoring method according to a first embodiment.
[Figure 2A] Figure 2A is a diagram showing a detected voltage value obtained by detecting, with a sensor included in a laser beam source, a power of a laser beam emitted by the laser beam source.
[Figure 2B] Figure 2B is a diagram showing a detected voltage value obtained by detecting, with a sensor included in the laser power monitoring device of the first embodiment, a power of a laser beam for irradiation of a material to be processed.
[Figure 3] Figure 3 is a diagram showing a laser power monitoring device and a laser power monitoring method according to a second embodiment.
[Figure 4] Figure 4 is a diagram showing detected voltage values obtained by respectively detecting, with two sensors included in the laser power monitoring device of the second embodiment, powers of laser beams emitted by a laser beam source.
[Figure 5] Figure 5 is a diagram showing a laser power monitoring device and a laser power monitoring method according to a third embodiment.
[Figure 6] Figure 6 is a diagram showing a laser power monitoring device and a laser power monitoring method according to a fourth embodiment.
[Figure 7] Figure 7 is a diagram showing a laser power monitoring device of a comparative example.
[Figure 8] Figure 8 is a diagram showing an example of measurement results obtained by measuring powers of P waves and S waves of a laser beam made incident on a dichroic mirror shown in Figure 7 for a predetermined measurement time.
[Figure 9] Figure 9 is a diagram showing a detected voltage value obtained by detecting, with a sensor included in a laser beam source shown in Figure 7, a power of a laser beam emitted from a laser beam source, and a detected voltage value obtained by detecting, with a sensor included in the laser power monitoring device of the comparative example, a power of a laser beam for irradiation of a material to be processed.

### Description of Embodiments

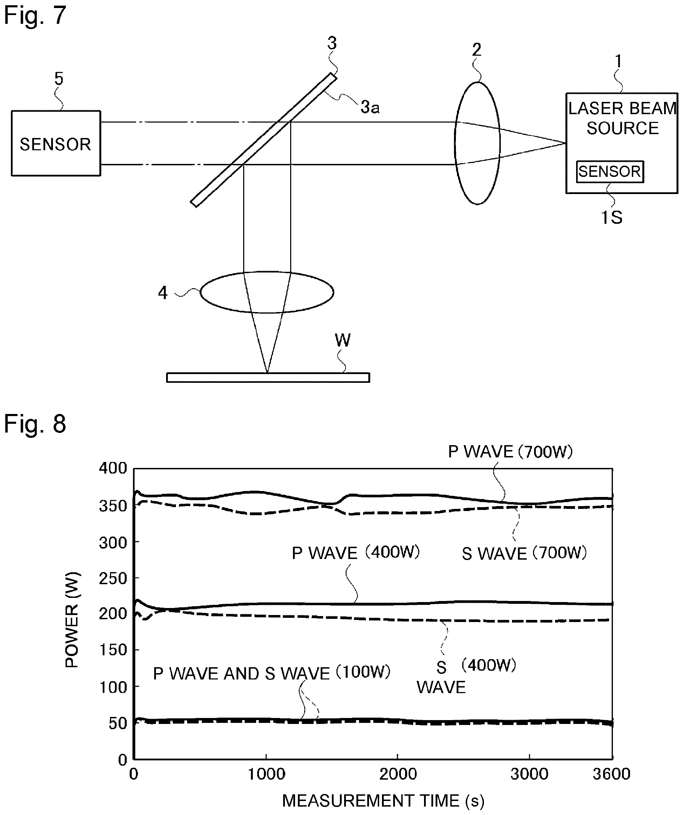

Hereinafter, a laser power monitoring device and a laser power monitoring method of respective embodiments will be described with reference to the attached drawings. First, the problems of a laser power monitoring device of a comparative example shown in Figure 7 will be described in detail.

In Figure 7, a laser beam source 1 emits a divergent laser beam. The laser beam source 1 is provided with a sensor 1S for detecting a power of the emitted laser beam. A collimating lens 2 converts the divergent laser beam made incident thereon into a collimated beam and emits the collimated beam. A dichroic mirror 3 is arranged in a state of being tilted by 45 degrees with respect to an optical axis of the collimated beam. A dielectric multilayer film is formed on an incident surface (a reflecting surface) 3a of the laser beam of the dichroic mirror 3. The laser beam made incident on the incident surface 3a of the dichroic mirror 3 is reflected by the incident surface 3a and is made incident on a focusing lens 4. The focusing lens 4 focuses the incident laser beam and irradiates a material to be processed W, which is a sheet metal, with the focused laser beam.

The laser beam source 1, the collimating lens 2, the dichroic mirror 3, and the focusing lens 4 constitute a laser processing machine that irradiates the material to be processed W with the laser beam to weld or cut the material to be processed W.

Of the laser beam made incident on the dichroic mirror 3, a slight laser beam indicated by the alternate long and short dash line passes through the dichroic mirror 3 and is made incident on a sensor 5. The sensor 5 generates a voltage value corresponding to a power of the incident laser beam. By monitoring the voltage value generated by the sensor 5, it is possible to monitor the power of the laser beam with which the laser processing machine irradiates the material to be processed W.

Figure 8 shows an example of measurement results obtained by measuring powers of P waves and S waves of the laser beam made incident on the dichroic mirror 3 for a predetermined measurement time (here, 3600 seconds). Figure 8 shows the results in which the laser beam, when a laser output of the laser beam source 1 is changed to 700 W, 400 W, and 100 W, is split into the P wave and the S wave with a polarized beam splitter and then the powers of the P wave and the S wave are measured for a predetermined time. In Figure 8, the solid line indicates the power of the P wave and the broken line indicates the power of the S wave. From Figure 8, it can be seen that the polarization ratio between the P wave and the S wave fluctuates greatly at 700 W and 400 W. Note that when the laser beam is made incident on the dielectric multilayer film at 45 degrees, the power of the P wave detected by the sensor 5 is higher than the power of the S wave because the P wave has a lower reflectance than the S wave.

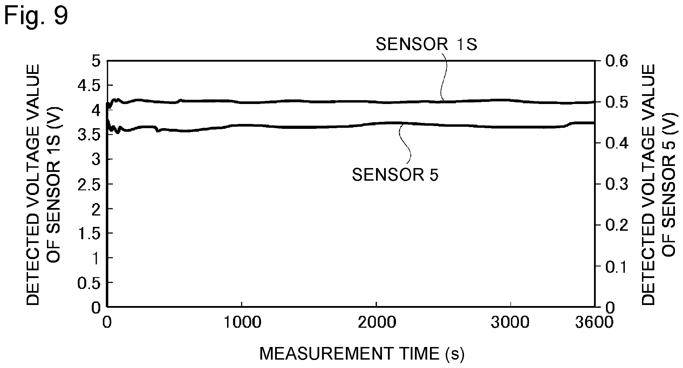

Figure 9 shows voltage values (detected voltage values) generated by the sensor 1S and the sensor 5, respectively, for a predetermined measurement time (3600 seconds) when the laser output of the laser beam source 1 is 700 W. As shown in Figure 9, the voltage value generated by the sensor 1S is substantially constant. In other words, the power of the laser beam emitted by the laser beam source 1 is controlled to be substantially constant.

However, the voltage value generated by the sensor 5 fluctuates greatly. This is because the polarization ratio of the P wave to the S wave fluctuates greatly as described above. As shown in Figure 8, since the power of the P wave is unstable, the unstable P wave exercises a great influence on the voltage value generated by the sensor 5. In the example shown in Figure 9, the voltage value generated by the sensor 5 fluctuates by about 8%. Therefore, it can be seen that if the laser power is monitored by the sensor 5, which detects the power of the laser beam that has passed through the dichroic mirror 3, stable monitoring is not possible due to the fluctuation of the polarization ratio.

First to fourth embodiments described below reduce the above problems and realize stable monitoring of the power of the laser beam even if the polarization ratio of the P wave to the S wave fluctuates.

### <First Embodiment>

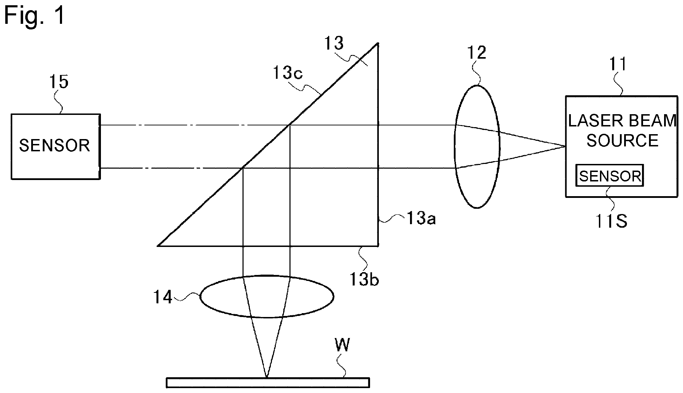

Figure 1 shows a laser power monitoring device and a laser power monitoring method according to the first embodiment. The first embodiment shows a basic configuration for stably monitoring a power of a laser beam, which is common to the first to fourth embodiments.

In Figure 1, a laser beam source 11 emits a divergent laser beam. The laser beam source 11 is provided with a sensor 11S for detecting a power of the emitted laser beam. The laser beam source 11 is, for example, a fiber laser oscillator. The laser beam source 11 may be any laser oscillator. A collimating lens 12 converts the divergent laser beam made incident thereon into a collimated beam and emits the collimated beam. The laser beam of the collimated beam is made incident on a right angle reflection prism 13.

Anti-reflection coating (AR coating) is applied to two surfaces 13a and 13b (first and second surfaces) of the right angle reflection prism 13, the surfaces 13a and 13b forming a right angle. The anti-reflection coating is set to have properties corresponding to the operating frequency band of the laser beam so that reflection of the laser beam within the operating frequency band is prevented. The anti-reflection coating is not applied to a surface 13c (a third surface) of the right angle reflection prism 13 connected to the surfaces 13a and 13b.

The laser beam emitted from the collimating lens 12 is made incident on the surface 13a of the right angle reflection prism 13 and reaches the surface 13c. If the laser beam is made incident on the surface 13c at an angle larger than the critical angle, the laser beam is totally reflected by the surface 13c and is emitted from the surface 13b. Note that when the right angle reflection prism 13 is made of synthetic quartz having a refractive index of 1.458, it is possible to calculate the critical angle θr to be about 43.3 degrees from sinθr = 1 / 1.458. If the incident angle, which is formed by the direction orthogonal to the surface 13c and the incident direction of the laser beam, is larger than the critical angle θr, the laser beam is totally reflected.

The laser beam emitted from the surface 13b of the right angle reflection prism 13 is made incident on a focusing lens 14. The focusing lens 14 focuses the incident laser beam and irradiates the material to be processed W with the focused laser beam.

The laser beam source 11, the collimating lens 12, the right angle reflection prism 13, and the focusing lens 14 constitute a laser processing machine that irradiates the material to be processed W with the laser beam to weld or cut the material to be processed W.

Of the laser beam made incident on the surface 13c of the right angle reflection prism 13, a slight laser beam (a leaked beam) indicated by the alternate long and short dash line passes through the surface 13c and is made incident on a sensor 15. The sensor 15 generates a voltage value corresponding to a power of the incident laser beam. One example of the sensor 15 is a photodiode. The photodiode may be a PIN photodiode. The sensor 15 may be any sensor that detects the power of the incident laser beam, and is not limited to the photodiode. By monitoring the voltage value generated by the sensor 15, it is possible to monitor the power of the laser beam with which the laser processing machine irradiates the material to be processed W.

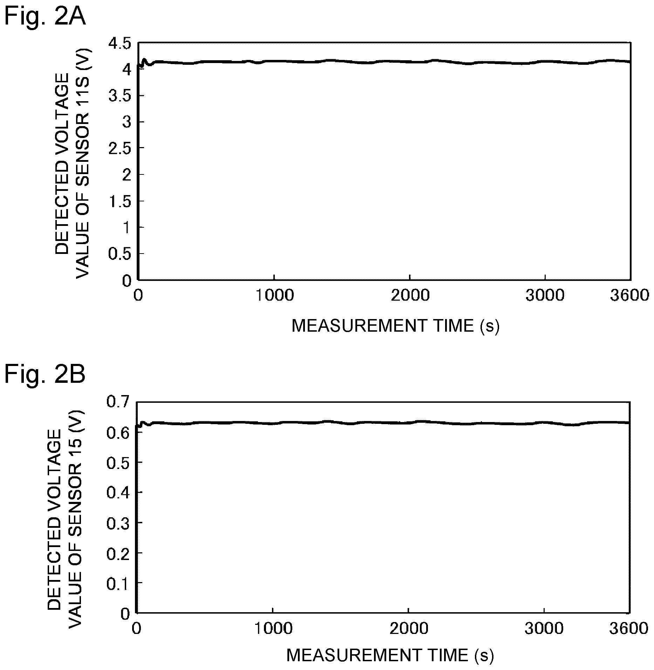

Figure 2A shows a voltage value (a detected voltage value) generated by the sensor 11S for a predetermined measurement time (here, 3600 seconds) when the laser output of the laser beam source 11 is 700 W. Figure 2B shows a voltage value (a detected voltage value) generated by the sensor 15 for the measurement time. As shown in Figure 2A, the voltage value generated by the sensor 11S is substantially constant. In other words, the power of the laser beam emitted by the laser beam source 11 is controlled to be substantially constant.

As shown in Figure 2B, the voltage value generated by the sensor 15 hardly fluctuates and is substantially constant. In the example shown in Figure 2B, the voltage value generated by the sensor 15 fluctuates only by about 1.86%. This is because, in the laser power monitoring device of the first embodiment, the sensor 15 does not detect the power of the laser beam that has passed through the dichroic mirror 3, but detects the power of the laser beam that has passed through the surface 13c that totally reflects the laser beam of the right angle reflection prism 13.

Since the right angle reflection prism 13 does not include the dielectric multilayer film on the surface 13C, even if the polarization ratio of the P wave to the S wave of the laser beam changes, there is no change in the reflectance, transmittance, or reflection band of the laser beam, which is caused by the presence of the dielectric multilayer film. Therefore, according to the laser power monitoring device and the laser power monitoring method of the first embodiment, even if the polarization ratio of the P wave to the S wave of the laser beam changes, it is possible to reduce (or eliminate) the influence, and stable monitoring of the laser power is made possible.

### <Second Embodiment>

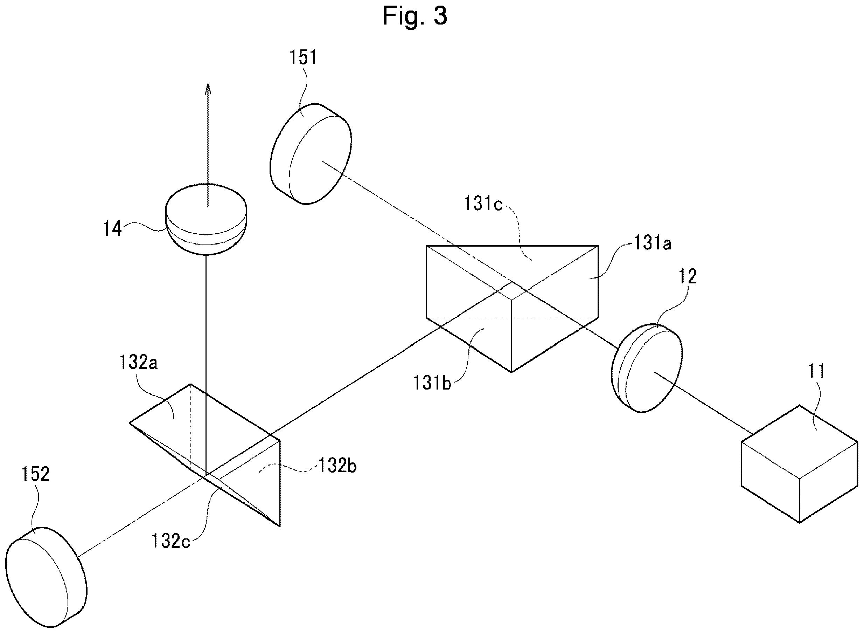

A laser power monitoring device of the second embodiment shown in Figure 3 is provided with two right angle reflection prisms. A laser power monitoring method of the second embodiment detects powers of laser beams that have passed through the surfaces totally reflecting the laser beam in the two right angle reflection prisms, respectively. In Figure 3, the same parts as those in Figure 1 are denoted by the same reference numerals, and the description thereof will be omitted.

In Figure 3, the laser beam emitted from the collimating lens 12 is made incident on a right angle reflection prism 131 (a first right angle reflection prism) . Surfaces 131a, 131b, and 131c of the right angle reflection prism 131 correspond to the surfaces 13a, 13b, and 13c of the right angle reflection prism 13 of Figure 1, respectively. The laser beam, which is totally reflected by the surface 131c of the right angle reflection prism 131 and is emitted from the surface 131b, is made incident on a right angle reflection prism 132 (a second right angle reflection prism).

Of the laser beams made incident on the surface 131c of the right angle reflection prism 131, a slight laser beam indicated by the alternate long and short dash line passes through the surface 131c and is made incident on a sensor 151 (a first sensor). The sensor 151 generates a voltage value corresponding to a power of the incident laser beam.

Surfaces 132a, 132b, and 132c of the right angle reflection prism 132 correspond to the surfaces 13a, 13b, and 13c of the right angle reflection prism 13 of Figure 1, respectively. The laser beam, which is totally reflected by the surface 132c of the right angle reflection prism 132 and is emitted from the surface 132b, is made incident on the focusing lens 14. The focusing lens 14 focuses the incident laser beam and irradiates the material to be processed W, which is not shown in Figure 3, with the focused laser beam.

Of the laser beams made incident on the surface 132c of the right angle reflection prism 132, a slight laser beam indicated by the alternate long and short dash line passes through the surface 132c and is made incident on a sensor 152 (a second sensor). The sensor 152 generates a voltage value corresponding to a power of the incident laser beam.

The laser beam source 11, the collimating lens 12, the right angle reflection prism 131, the right angle reflection prism 132, and the focusing lens 14 constitute a laser processing machine that irradiates the material to be processed W with the laser beam to weld or cut the material to be processed W.

According to the laser power monitoring device and the laser power monitoring method of the second embodiment, in addition to the same effect as that of the first embodiment, it is possible to monitor, with the two sensors 151 and 152, the power of the laser beam with which the laser processing machine irradiates the material to be processed W.

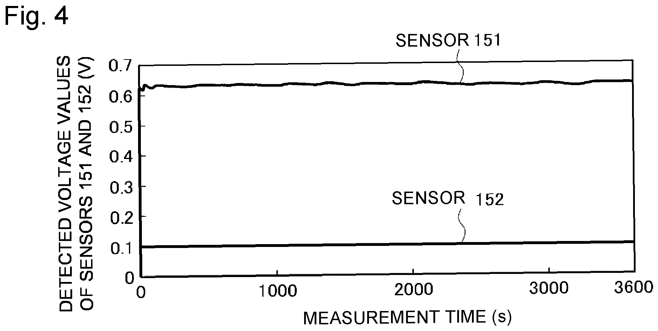

Figure 4 shows voltage values (detected voltage values) generated by the sensors 151 and 152, respectively. The voltage value generated by the sensor 151 fluctuates by about 1.5%, and the fluctuation of the voltage value generated by the sensor 152 can also be maintained to the same degree. It is also possible to configure the laser power monitoring device to include three or more right angle reflection prisms.

### <Third Embodiment>

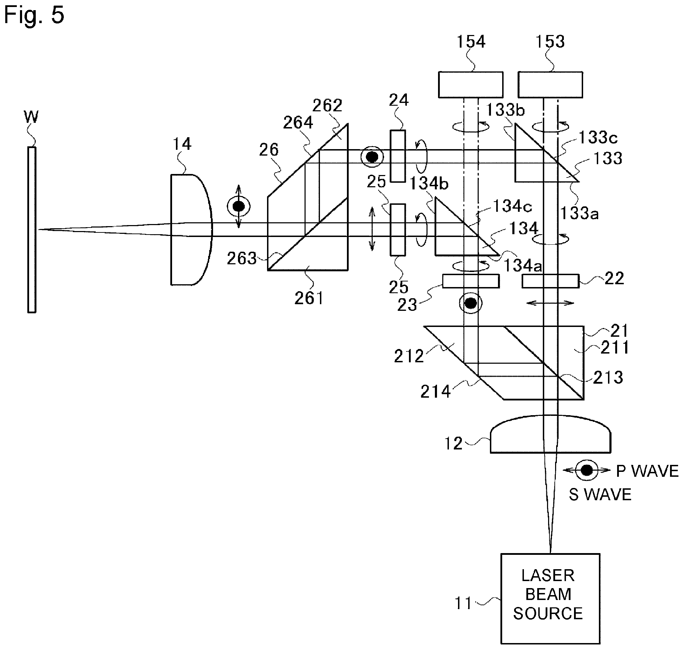

A laser power monitoring device and a laser power monitoring method of the third embodiment shown in Figure 5 are configured to split a laser beam into a P wave and an S wave, convert the P wave and the S wave into circularly polarized beams to be totally reflected by two right angle reflection prisms, and detect powers of the circularly polarized beams with two sensors. In Figure 5, the same parts as those in Figure 1 are denoted by the same reference numerals, and the description thereof will be omitted.

In Figure 5, the laser beam emitted from the laser beam source 11 includes a linearly polarized P wave and a linearly polarized S wave. The laser beam emitted from the laser beam source 11 is made incident on a polarized beam splitter 21 (a first polarized beam splitter). The polarized beam splitter 21 is configured by joining a prism 211 and a prism 212 at a joint surface 213. The joint surface 213 is provided with a dielectric multilayer film that transmits the P wave and reflects the S wave. The P wave passes through the joint surface 213 and is made incident on a 1/4 wavelength plate 22 (a first 1/4 wavelength plate). The S wave is reflected by a surface 214 of the prism 212 and made incident on a 1/4 wavelength plate 23 (a second 1/4 wavelength plate).

The 1/4 wavelength plate 22 converts the linearly polarized P wave made incident thereon into a first circularly polarized beam. The 1/4 wavelength plate 23 converts the linearly polarized S wave made incident thereon into a second circularly polarized beam. The first circularly polarized beam is made incident on a right angle reflection prism 133 (a first right angle reflection prism). The second circularly polarized beam is made incident on a right angle reflection prism 134 (a second right angle reflection prism). Surfaces 133a, 133b, and 133c of the right angle reflection prism 133 correspond to the surfaces 13a, 13b, and 13c of the right angle reflection prism 13 of Figure 1, respectively. Surfaces 134a, 134b, and 134c of the right angle reflection prism 134 correspond to the surfaces 13a, 13b, and 13c of the right angle reflection prism 13 of Figure 1, respectively.

The first circularly polarized beam made incident on the surface 133a of the right angle reflection prism 133 is totally reflected by the surface 133c, is emitted from the surface 133b, and is made incident on a 1/4 wavelength plate 24. The second circularly polarized beam made incident on the surface 134a of the right angle reflection prism 134 is totally reflected by the surface 134c, is emitted from the surface 134b, and is made incident on a 1/4 wavelength plate 25.

The 1/4 wavelength plate 24 converts the first circularly polarized beam made incident thereon into a linearly polarized S wave. The 1/4 wavelength plate 25 converts the second circularly polarized beam made incident thereon into a linearly polarized P wave. The linearly polarized P wave and the linearly polarized S wave are made incident on a polarized beam splitter 26. The polarized beam splitter 26 is configured by joining a prism 261 and a prism 262 at a joint surface 263. The joint surface 263 is provided with a dielectric multilayer film that transmits the P wave and reflects the S wave. The P wave passes through the joint surface 263, and the S wave is reflected by a surface 264 of the prism 262 and the joint surface 263. As a result, the linearly polarized P wave and the linearly polarized S wave are combined to be emitted from the polarized beam splitter 26.

The laser beam including the linearly polarized P wave and the linearly polarized S wave emitted from the polarized beam splitter 26 is made incident on the focusing lens 14. The focusing lens 14 focuses the incident laser beam and irradiates the material to be processed W with the focused laser beam.

The laser beam source 11, the collimating lens 12, the polarized beam splitter 21, the 1/4 wavelength plates 22 and 23, the right angle reflection prisms 133 and 134, the 1/4 wavelength plates 24 and 25, the polarized beam splitter 26, and the focusing lens 14 constitute a laser processing machine that irradiates the material to be processed W with the laser beam to weld or cut the material to be processed W.

Of the first circularly polarized beam made incident on the surface 133c of the right angle reflection prism 133, a slight circularly polarized beam indicated by the alternate long and short dash line passes through the surface 133c and is made incident on a sensor 153. The sensor 153 generates a voltage value corresponding to a power of the incident circularly polarized beam. Of the second circularly polarized beam made incident on the surface 134c of the right angle reflection prism 134, a slight circularly polarized beam indicated by the alternate long and short dash line passes through the surface 134c and is made incident on a sensor 154. The sensor 154 generates a voltage value corresponding to a power of the incident circularly polarized beam.

In the laser power monitoring device and the laser power monitoring method of the third embodiment, the linearly polarized P wave and the linearly polarized S wave are converted into the circularly polarized beams, and the circularly polarized beams are totally reflected by the right angle reflection prisms 133 and 134. Compared with the case in which the linearly polarized P wave and the linearly polarized S wave are totally reflected by the right angle reflection prisms 133 and 134, in the case in which the circularly polarized beams are totally reflected by the right angle reflection prisms 133 and 134, a gap, which is caused by a difference in the polarization direction at the time of totally reflecting the polarization components, is less likely to be generated.

In the third embodiment, the polarization ratio may change slightly when splitting into the P wave and the S wave is performed by the polarized beam splitter 21. However, since the circularly polarized beams are totally reflected by the right angle reflection prisms 133 and 134, the change in the polarization ratio is not so problematic as compared with the configuration in which the circularly polarized beam is reflected by the dichroic mirror.

In the third embodiment, when the polarization ratio of the P wave to the S wave changes, the voltage values generated by the sensors 153 and 154 fluctuate. Therefore, a value obtained by averaging the voltage values of the sensors 153 and 154 may be monitored.

### <Fourth Embodiment>

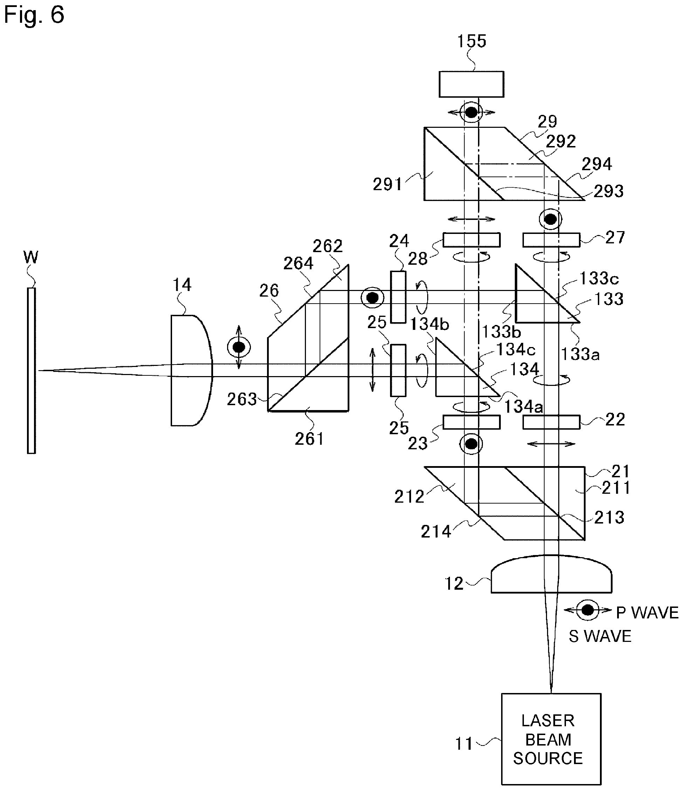

A laser power monitoring device and a laser power monitoring method of the fourth embodiment shown in Figure 6 are configured to split a laser beam into a P wave and an S wave, convert the P wave and the S wave into circularly polarized beams to be totally reflected by two right angle reflection prisms, return the circularly polarized beams to a linearly polarized beam, and detect a combined power of the P wave and the S wave with one sensor. In Figure 6, the same parts as those in Figure 5 are denoted by the same reference numerals, and the description thereof will be omitted.

In Figure 6, of the first circularly polarized beam, a slight circularly polarized beam indicated by the alternate long and short dash line that has passed through the surface 133c of the right angle reflection prism 133 is made incident on a 1/4 wavelength plate 27 (a third 1/4 wavelength plate). The 1/4 wavelength plate 27 converts the circularly polarized beam made incident thereon into a linearly polarized S wave. The linearly polarized S wave is made incident on a polarized beam splitter 29 (a second polarized beam splitter). Of the second circularly polarized beam, a slight circularly polarized beam indicated by the alternate long and short dash line that has passed through the surface 134c of the right angle reflection prism 134 is made incident on a 1/4 wavelength plate 28 (a fourth 1/4 wavelength plate). The 1/4 wavelength plate 28 converts the circularly polarized beam made incident thereon into a linearly polarized P wave. The linearly polarized P wave is made incident on the polarized beam splitter 29.

The polarized beam splitter 29 is configured by joining a prism 291 and a prism 292 at a joint surface 293. The joint surface 293 is provided with a dielectric multilayer film that transmits the P wave and reflects the S wave. The P wave passes through the joint surface 293, and the S wave is reflected by a surface 294 of the prism 292 and the joint surface 293. As a result, the linearly polarized P wave and the linearly polarized S wave are combined and emitted from the polarized beam splitter 29. The laser beam obtained by combining the linearly polarized P wave and the linearly polarized S wave emitted from the polarized beam splitter 29 is made incident on a sensor 155. The sensor 155 generates a voltage value corresponding to a power of the incident laser beam.

In the same manner as the third embodiment, in the fourth embodiment as well, the polarization ratio may change slightly when splitting into the P wave and the S wave is performed by the polarized beam splitter 21. However, in the laser power monitoring device and the laser power monitoring method of the fourth embodiment, the linearly polarized P wave and the linearly polarized S wave are combined by the polarized beam splitter 29, and the power of the combined laser beam is detected by the sensor 155. Therefore, even if the polarization ratio of the P wave to the S wave changes, the power of the combined laser beam will not change. As a result, it is possible to detect the power of the laser beam accurately.

In the fourth embodiment, it is possible to detect the power of the laser beam with the one sensor 155.

The present invention is not limited to the first to fourth embodiments described above, and various modifications can be made without departing from the summary of the present invention. Any method can be used for specifically monitoring the powers of the laser beams detected by the sensors 15, 151 to 155.

The present application claims the priority based on Japanese Patent Application No. 2020-055949 filed with the Japan Patent Office on March 26, 2020, and all the disclosure contents thereof are incorporated herein by reference.

## Claims

1. A laser power monitoring device, comprising:
a right angle reflection prism including first and second surfaces that form a right angle, and a third surface connected to the first and second surfaces, a laser beam for irradiation of a material to be processed being incident on the first surface, and being totally reflected by the third surface so as to be emitted from the second surface; and
a sensor configured to detect a power of a laser beam that has passed through the third surface.

2. The laser power monitoring device according to claim 1, wherein anti-reflection coating is applied to the first and second surfaces, and the anti-reflection coating is not applied to the third surface.

3. The laser power monitoring device according to claim 1 or 2, further comprising:
a plurality of the right angle reflection prisms; and
a plurality of sensors each configured to detect a power of a laser beam that has passed through the third surface of each of the plurality of right angle reflection prisms.

4. The laser power monitoring device according to claim 1 or 2, further comprising:
a first polarized beam splitter configured to split a laser beam for irradiation of the material to be processed into a linearly polarized P wave and a linearly polarized S wave;
a first 1/4 wavelength plate configured to convert the linearly polarized P wave into a first circularly polarized beam;
a second 1/4 wavelength plate configured to convert the linearly polarized S wave into a second circularly polarized beam;
a first right angle reflection prism configured to cause the first circularly polarized beam to be totally reflected, as the right angle reflection prism;
a second right angle reflection prism configured to cause the second circularly polarized beam to be totally reflected, as the right angle reflection prism;
a first sensor configured to detect, as the sensor, a power of a circularly polarized beam of the first circularly polarized beam, the circularly polarized beam of the first circularly polarized beam having passed through the third surface of the first right angle reflection prism; and
a second sensor configured to detect, as the sensor, a power of a circularly polarized beam of the second circularity polarized beam, the circularly polarized beam of the second circularity polarized beam having passed through the third surface of the second right angle reflection prism.

5. The laser power monitoring device according to claim 1 or 2, further comprising:
a first polarized beam splitter configured to split a laser beam for irradiation of the material to be processed into a linearly polarized P wave and a linearly polarized S wave;
a first 1/4 wavelength plate configured to convert the linearly polarized P wave into a first circularly polarized beam;
a second 1/4 wavelength plate configured to convert the linearly polarized S wave into a second circularly polarized beam;
a first right angle reflection prism configured to cause the first circularly polarized beam to be totally reflected, as the right angle reflection prism;
a second right angle reflection prism configured to cause the second circularly polarized beam to be totally reflected, as the right angle reflection prism;
a third 1/4 wavelength plate configured to convert a circularly polarized beam of the first circularly polarized beam into a linearly polarized S wave, the circularly polarized beam of the first circularly polarized beam having passed through the third surface of the first right angle reflection prism;
a fourth 1/4 wavelength plate configured to convert a circularly polarized beam of the second circularly polarized beam into a linearly polarized P wave, the circularly polarized beam of the second circularly polarized beam having passed through the third surface of the second right angle reflection prism;
a second polarized beam splitter configured to combine the linearly polarized S wave emitted from the third 1/4 wavelength plate and the linearly polarized P wave emitted from the fourth 1/4 wavelength plate; and
as the sensor, a sensor configured to detect a power of a laser beam including the linearly polarized P wave and the linearly polarized S wave, the linearly polarized P wave and the linearly polarized S wave being combined by the second polarized beam splitter.

6. A laser power monitoring method, comprising:
causing a laser beam for irradiation of a material to be processed to be made incident on a first surface of a right angle reflection prism including the first surface and a second surface that form a right angle, and a third surface connected to the first and second surfaces;
causing the laser beam made incident on the first surface to be totally reflected by the third surface so as to be emitted from the second surface; and
detecting, by a sensor, a power of a laser beam that has passed through the third surface.

7. The laser power monitoring method according to claim 6, further comprising, with use of first and second right angle reflection prisms each including first and second surfaces that form a right angle, and a third surface connected to the first and second surfaces:
causing a laser beam for irradiation of a material to be processed to be made incident on the first surface of the first right angle reflection prism;
causing the laser beam made incident on the first surface of the first right angle reflection prism to be totally reflected by the third surface of the first right angle reflection prism so as to be emitted from the second surface of the first right angle reflection prism;
causing the laser beam emitted from the second surface of the first right angle reflection prism to be made incident on the first surface of the second right angle reflection prism;
causing the laser beam made incident on the first surface of the second right angle reflection prism to be totally reflected by the third surface of the second right angle reflection prism so as to be emitted from the second surface of the second right angle reflection prism;
detecting, by a first sensor, a power of a laser beam that has passed through the third surface of the first right angle reflection prism; and
detecting, by a second sensor, a power of a laser beam that has passed through the third surface of the second right angle reflection prism.

8. The laser power monitoring method according to claim 6, further comprising:
splitting, by a first polarized beam splitter, a laser beam for irradiation of the material to be processed into a linearly polarized P wave and a linearly polarized S wave;
converting, by a first 1/4 wavelength plate, the linearly polarized P wave into a first circularly polarized beam;
converting, by a second 1/4 wavelength plate, the linearly polarized S wave into a second circularly polarized beam;
causing the first circularly polarized beam to be totally reflected by using a first right angle reflection prism as the right angle reflection prism;
causing the second circularly polarized beam to be totally reflected by using a second right angle reflection prism as the right angle reflection prism;
detecting a power of a circularly polarized beam of the first circularly polarized beam by using a first sensor as the sensor, the circularly polarized beam of the first circularly polarized beam having passed through the third surface of the first right angle reflection prism; and
detecting a power of a circularly polarized beam of the second circularly polarized beam by using a second sensor as the sensor, the circularly polarized beam of the second circularly polarized beam having passed through the third surface of the second right angle reflection prism.

9. The laser power monitoring method according to claim 6, further comprising:
splitting, by a first polarized beam splitter, a laser beam for irradiation of the material to be processed into a linearly polarized P wave and a linearly polarized S wave;
converting, by a first 1/4 wavelength plate, the linearly polarized P wave into a first circularly polarized beam;
converting, by a second 1/4 wavelength plate, the linearly polarized S wave into a second circularly polarized beam;
causing the first circularly polarized beam to be totally reflected by using a first right angle reflection prism as the right angle reflection prism;
causing the second circularly polarized beam to be totally reflected by using a second right angle reflection prism as the right angle reflection prism;
converting, by a third 1/4 wavelength plate, a circularly polarized beam of the first circularly polarized beam into a linearly polarized S wave, the circularly polarized beam of the first circularly polarized beam having passed through the third surface of the first right angle reflection prism;
converting, by a fourth 1/4 wavelength plate, a circularly polarized beam of the second circularly polarized beam into a linearly polarized P wave, the circularly polarized beam of the second circularly polarized beam having passed through the third surface of the second right angle reflection prism;
combining, by a second polarized beam splitter, the linearly polarized S wave emitted from the third 1/4 wavelength plate and the linearly polarized P wave emitted from the fourth 1/4 wavelength plate; and
detecting, by the sensor, a power of a laser beam including the linearly polarized P wave and the linearly polarized S wave, the linearly polarized P wave and the linearly polarized S wave being combined by the second polarized beam splitter.
